# EUROPÄISCHE PATENTSCHRIFT

(11) **EP 2 557 664 B1**
(45) Veröffentlichungstag und Bekanntmachung des Hinweises auf die Patenterteilung: **13.03.2019**
(21) Anmeldenummer: 12168614.1
(22) Anmeldetag: 21.05.2012
(51) Int. Cl.: H02K 3/51

(54) **Rotierende elektrische Maschine**
Rotating electric machine
Machine à rotation électrique

(30) Priorität: 11.08.2011 DE 102011109952
(43) Veröffentlichungstag der Anmeldung: 13.02.2013
(73) Patentinhaber: GE Renewable Technologies, 38100 Grenoble (FR)
(72) Erfinder: Cifyildiz, Serdar, 8400 Winterthur (CH); Schwery, Alexander, 5024 Küttigen (CH); Okai, Ricardo, 5442 Fislisbach (CH); Walser, Hanspeter, 4712 Laupersdorf (CH); Schmid, Matthias, 5413 Birmenstorf (CH)
(74) Vertreter: General Electric Technology GmbH

(56) Entgegenhaltungen:
- WO-A1-2008/119661
- DE-A1- 19 513 457
- DE-C- 573 444
- US-A- 2 712 085
- US-A- 5 264 750

## Beschreibung

### TECHNISCHES GEBIET

Die vorliegende Erfindung bezieht sich auf das Gebiet der elektrischen Maschinen. Sie betrifft eine rotierende elektrische Maschine, insbesondere einen Hydro-Generator, gemäß dem Oberbegriff des Anspruchs 1.

### STAND DER TECHNIK

Die Erfindung bezieht sich auf einen Rotor einer elektrischen Maschine, insbesondere einen Hydro-Generator, wie er beispielsweise bei Pumpspeicherwerken eingesetzt wird, mit einem Rotorkörper, der aus lamellierten Blechen aufgebaut und durch axiale Spannbolzen zusammengehalten wird. Am Außenumfang des Rotorkörpers sind axiale Wicklungsnuten angeordnet, in die eine Rotorwicklung eingelegt und dort gegen Fliehkrafteinwirkung gehalten ist. Die aus dem Rotorkörper axial austretenden, einen Wickelkopf bildenden Wicklungsstäbe sind durch spezielle Abstützmittel gegen Fliehkrafteinwirkung gesichert.

Bei solchen Maschinen ist der Wickelkopf am Rotor extremen mechanischen und thermischen Belastungen ausgesetzt. Die Wickelkopfabstützung gegen Fliehkräfte kann dabei mittels Bandagen aus vorgespanntem Stahldraht in Kombination mit einem massiven einteiligen Stahlring erfolgen. Durch die aufwendigen Montagehilfsmittel, die Transportabmessungen und durch die Gewichtslimitierung des Rotors ergeben sich jedoch Grenzen. Für Rotoren von Wasserkraftmaschinen mit großen Dimensionen muss der Zusammenbau direkt auf einem Montageplatz im Kraftwerk erfolgen können. Darüber hinaus beeinträchtigen große massive Stahlringe die Durchströmung des Wickelkopfes und damit dessen Kühlung.

Aus der Druckschrift DE 195 13 457 ist es nun bekannt, an den Endblechen des Rotorkörpers Pressfinger anzuordnen, sowie einen Stützring aus mindestens zwei von in Axialrichtung beabstandeten Ringen vorzusehen, die sich an ihrem Innenumfang auf der Nabe abstützen, wobei die Ringe im achsnahen Abschnitt des Rotorkörpers zusammen mit den Pressfingern mit dem den Rotorkörper axial durchsetzenden ersten Zugbolzen zusammengespannt sind. Im achsferneren Abschnitt sind zweite Zugbolzen vorgesehen, welche nur die besagten Ringe axial durchsetzen und die Ringe axial zusammenspannen. Schließlich sind dritte, den Wickelkopf radial durchsetzende Zugbolzen vorgesehen, welche zumindest am Aussenumfang des axial gesehen äußersten Ringes angreifen.

Am Außenumfang aller Ringe ist in Umfangsrichtung verteilt eine Vielzahl von axial verlaufenden, miteinander fluchtenden, halbgeschlossene Nuten vorgesehen, in welche je ein mit radial verlaufenden Gewindebohrungen versehenes Lineal geschoben ist, in welche Gewindebohrungen die besagten dritten Zugbolzen eingeschraubt sind. Dies ergibt eine einfach herzustellende und sichere radiale Abstützung.

Die axiale thermische Dehnung der Wicklung bei Erwärmung kann bei dieser bekannten Anordnung jedoch dazu führen, dass die Wicklung auf die Wickelkopfbolzen (die dritten Bolzen) drückt und diese so eine unerwünschte und nicht tolerierbare Biegung erfahren.

In der Druckschrift WO 2010/115481 ist zur Vermeidung dieser Probleme eine dynamoelektrische Maschine vorgeschlagen worden, mit einem Rotorballen, einem ringförmigen Wickelkopf, der axial neben dem Rotorballen und zu diesem koaxial angeordnet ist und einem Tragring, der radial innerhalb des Wickelkopfes und zu diesem koaxial angeordnet ist, wobei Wickelkopf und Tragring mit dem Rotorballen drehfest verbunden sind und Wickelkopf und Tragring in radialer Richtung durch Zugstäbe miteinander verspannt sind, die durch Radialbohrungen in den Wickelköpfen und im Tragring hindurchgeführt sind. Die Zugstäbe greifen dabei mit ihren radial inneren Enden am Tragring und mit ihren radial äußeren Enden an Lagerkörpern an, die am Wickelkopf anliegen. Die lichten Weiten der Radialbohrungen im Tragkörper weisen gegenüber den Durchmessern der Zugstäbe Übermass auf und die Lagerung der radial inneren Enden der Zugstäbe am Tragring und der radial äusseren Enden der Zugstäbe am Wickelkopf erlaubt eine begrenzte Kippbewegung der Zugstäbe gegen die Radialrichtung. Dies wird insbesondere dadurch erreicht, dass wenigstens einige der Enden der Zugstäbe mittels Lagerkörpern gelagert sind, die eine sphärische Lagerfläche aufweisen.

Nachteilig ist bei dieser Lösung jedoch, dass alle Zugstäbe einzeln für eine Kippbewegung vorbereitet werden müssen, was einen erheblichen konstruktiven und montagetechnischen Aufwand zur Folge hat.

Die WO 2008/119661 A1 beschreibt einen Rotor einer elektrischen Maschine, insbesondere eines Hydrogenerators, welcher ein Rotorjoch mit am äusseren Umfang verteilt angeordneten axialen Wicklungsnuten umfasst, in die Wicklungsstäbe der Rotorwicklung eingelegt sind, deren axial aus dem Rotorjoch austretenden Wicklungsenden einen Wickelkopf bilden, welcher mittels einer eine Vielzahl von radialen Bolzen umfassenden Rückhaltevorrichtung gegen die angreifenden Fliehkräfte zurückgehalten wird, wobei die radialen Bolzen fest mit dem Schaft verbundene Köpfe aufweisen.

### DARSTELLUNG DER ERFINDUNG

Es ist daher eine Aufgabe der Erfindung, eine rotierende elektrische Maschine der eingangs genannten Art zu schaffen, welche die Nachteile der bekannten Maschinen im Bezug auf die Fliehkraftsicherung der Wickelköpfe vermeidet und sich durch eine konstruktiv einfache und wirksame Neutralisierung der thermischen Ausdehnung der Wickelköpfe auszeichnet.

Die Aufgabe wird durch die Gesamtheit der Merkmale des Anspruchs 1 gelöst.

Die Erfindung geht aus von einer rotierende elektrische Maschine, insbesondere Hydro-Generator, mit einem Rotor, welcher ein sich in Richtung einer Maschinenachse erstreckendes Rotorblechpaket mit einer Rotorwicklung umfasst, wobei die Rotorwicklung an den Enden des Rotorblechpakets jeweils einen Wickelkopf ausbildet, der zum Abfangen von Zentrifugalkräften mittels radial durch den Wickelkopf hindurchgehender Bolzen an einem sich in axialer Richtung an das Rotorblechpaket anschließenden, konzentrisch innerhalb des Wickelkopfes angeordneten Wickelkopf-Rim befestigt ist, und wobei die Befestigung zur sicheren Aufnahme von axialen Dehnungen des Wickelkopfes ausgebildet ist.

Sie zeichnet sich dadurch aus, dass die Bolzen am Wickelkopf-Rim jeweils an einem sich in axialer Richtung ersteckenden T-Hammerprofil befestigt sind, welches axial verschieblich in einer zugehörigen axialen T-Nut im Wickelkopf-Rim gelagert ist, wobei zusätzliche Kopplungsmittel zur Übertragung der axialen Dehnungen des Wickelkopfes auf das T-Hammerprofil vorgesehen sind.

Eine Ausgestaltung der erfindungsgemäßen Maschine ist dadurch gekennzeichnet, dass die zusätzlichen Kopplungsmittel eine feste mechanische Kopplung zwischen dem Wickelkopf und dem T-Hammerprofil umfassen. Insbesondere greift das T-Hammerprofil mit einem radial nach aussen abgewinkelten Radialteil hinter den Wickelkopf und ist am Radialteil mittels eines Axialverbinders mit dem Wickelkopf verbunden.

Eine andere Ausgestaltung der erfindungsgemäßen Maschine ist dadurch gekennzeichnet, dass die Bolzen als Schraubbolzen ausgebildet und in das T-Hammerprofil eingeschraubt sind.

Eine weitere Ausgestaltung der erfindungsgemäßen Maschine ist dadurch gekennzeichnet, dass in axialer Richtung jeweils mehrere Bolzen mit derselben radialen Ausrichtung hintereinander angeordnet sind, und dass alle Bolzen derselben radialen Ausrichtung an einem gemeinsamen T-Hammerprofil befestigt bzw. in ein gemeinsames T-Hammerprofil eingeschraubt sind.

Insbesondere wirken alle Bolzen derselben radialen Ausrichtung über ein gemeinsames Halteelement von außen auf den Wickelkopf ein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht einen Ausschnitt aus einem Rotor einer rotierende elektrische Maschine gemäß einem Ausführungsbeispiel der Erfindung; und
- Fig. 2: in zwei unterschiedlichen Ansichten von oben (Fig. 2a) und von der Seite (Fig. 2b) die Kopplung zwischen Wickelkopf und Befestigung gemäß einem Ausführungsbeispiel der Erfindung.

### WEGE ZUR AUSFÜHRUNG DER ERFINDUNG

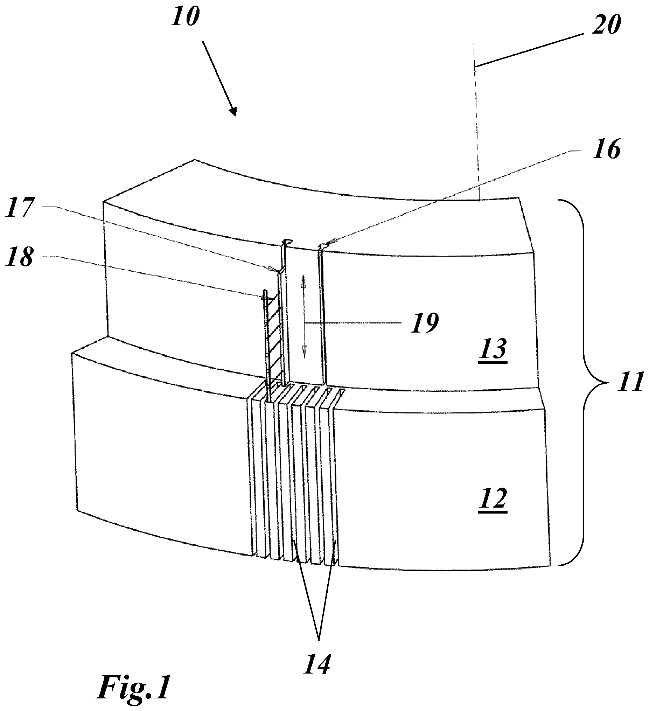

Fig. 1 zeigt in einer perspektivischen Seitenansicht einen Ausschnitt aus einem Rotor einer rotierenden elektrischen Maschine 10 gemäß einem Ausführungsbeispiel der Erfindung. Der Rotor 11, von dem nur ein Ausschnitt zu sehen ist, erstreckt sich entlang einer Maschinenachse 20 und umfasst einen Rotorkörper beziehungsweise ein Rotorblechpaket 12, an welches an dem dargestellten Ende ein Wickelkopf-Rim 13 anschließt.

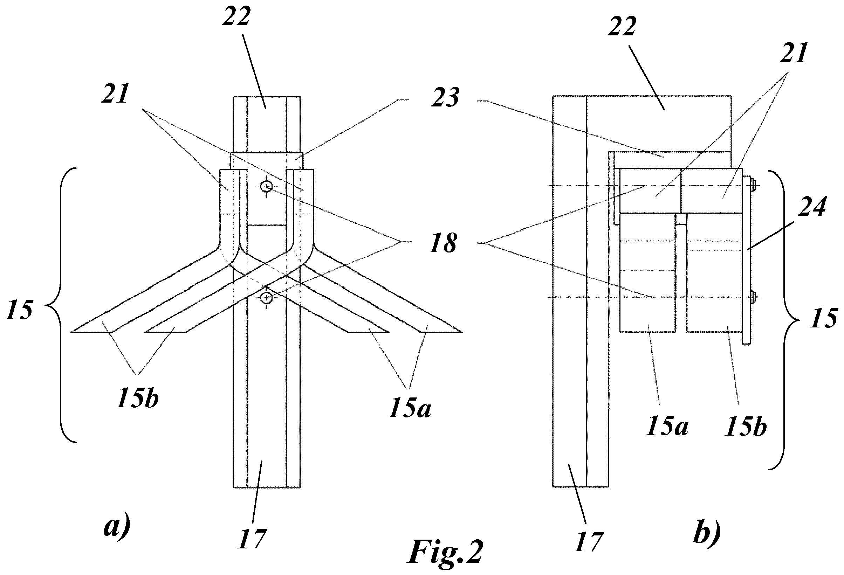

Auf dem Außenumfang des Rotorblechpakets 12 sind axiale Wicklungsnuten angeordnet, welche die (nicht dargestellte) Rotorwicklung aufnehmen. Die aus dem Rotorblechpaket 12 heraustretenden frei liegenden Wicklungsstäbe (15a,b in Fig. 2) bilden einen Wickelkopf (15 in Fig. 2), der gegen die beim Betrieb der Maschine auftretenden Zentrifugalkräfte (Fliehkräfte) abgestützt werden muss.

Hierzu sind im Bereich des Wickelkopfes 15 radial orientierte Bolzen 18 vorgesehen, die durch den Wickelkopf 15 hindurch reichen und am Wickelkopf-Rim 13 befestigt sind. Um eine freie axiale Ausdehnung des Wickelkopfes 15 und dessen Befestigung zu ermöglichen, muss die ganze Wickelkopf-Befestigung die thermischen Ausdehnungen der Wicklung kompensieren. Bei der vorgeschlagenen Lösung wird dies dadurch erreicht, dass sich die Wickelkopf-Befestigung in axialer Richtung bewegen kann. Für jede axiale Reihe von Bolzen 18 mit gleicher radialer Ausrichtung ist jeweils ein gemeinsames, sich axial erstreckendes T-Hammerprofil 17 vorgesehen, an welchem die Bolzen 18 für den Wickelkopf 15 befestigt sind. Das T-Hammerprofil 17 ist dazu mit entsprechend beabstandeten Gewindelöchern versehen, in welche die als Gewindebolzen ausgebildeten Bolzen 18 mit ihren inneren Enden eingeschraubt sind. Die T-Hammerprofile 17 sind in axial orientierten, angepassten T-Nuten 16 des Wickelkopf-Rims 13 axial geführt. Auf der Aussenseite stützen sich die Bolzen 18 mit ihrem Kopf an einem gemeinsamen, sich axial erstreckenden Halteelement 24 ab, welches Druck auf den Wickelkopf 15 ausübt.

Durch den gezeigten Aufbau des Wickelkopfes 15 und seiner Befestigung am Wickelkopf-Rim 13 wird erreicht, dass einerseits die im Betrieb am Wickelkopf 15 auftretenden Fliehkräfte aufgefangen und in den Wickelkopf-Rim 13 eingeleitet werden, und dass andererseits die thermische Ausdehnung der Wicklung keine Scherkräfte an den Bolzen 18 aufbaut, weil diese sich kollektiv mit der gesamten Befestigung relativ zum Wickelkopf-Rim 13 in der in Fig. 1 eingezeichneten axialen Bewegungsrichtung 19 bewegen können, indem das T-Hammerprofil 17 in der T-Nut 16 in axialer Richtung gleitet.

Um die bei der thermischen Ausdehnung der Wicklung unmittelbar auf die T-Hammerprofile 17 zu übertragen, werden gemäß der Erfindung zusätzliche Kopplungsmittel zwischen Wickelkopf 15 und T-Hammerprofilen 17 vorgesehen. Die Kopplung des T-Hammerprofils 17 mit der Wicklung bzw. dem Wickelkopf 15 wird über ein Zwischenstück, den Axialverbinder 23, zwischen einem radial nach außen abgewinkelten Radialteil 22 am äusseren Ende des T-Hammerprofils 17 und dem Wickelkopf 15, realisiert. Der Axialverbinder 23 wird spielfrei zwischen den Lötösen 21 des Wickelkopfes 15 und dem Radialteil 22 bzw. der Schulter des T-Hammerprofils 17 eingebaut. Der abgewinkelt und unter den Wickelkopf 15 greifende Axialverbinder 23 wird gemäß Fig. 2b in radialer Richtung wiederum von einem (dem äußeren) Wickelkopf-Bolzen 18 in Position gehalten.

Sobald sich die Wicklung thermisch ausdehnt und sich die Lötösen 21 entsprechend axial bewegen, wird so das T-Hammerprofil 17 auch parallel mitgeschoben. Die Wickelkopfbolzen 18 werden auf diese Weise nur auf Zug beansprucht und erfahren keine Biegung.

### BEZUGSZEICHENLISTE

- 10: rotierende elektrische Maschine (insb. Hydro-Generator)
- 11: Rotor
- 12: Rotorblechpaket
- 13: Wickel kopf-Rim
- 14: Wicklungsnut
- 15: Wickel kopf
- 15a,b: Wicklungstab
- 16: T-Nut
- 17: T-Hammerprofil
- 18: Bolzen (Wickelkopf)
- 19: Bewegungsrichtung
- 20: Maschinenachse
- 21: Lötöse
- 22: Radialteil
- 23: Axialverbinder
- 24: Halteelement

## Patentansprüche

1. Rotierende elektrische Maschine (10), insbesondere Hydro-Generator, mit einem Rotor (11), welcher ein sich in Richtung einer Maschinenachse (20) erstreckendes Rotorblechpaket (12) mit einer Rotorwicklung (15a,b) umfasst, wobei die Rotorwicklung (15a,b) an den Enden des Rotorblechpakets (12) jeweils einen Wickelkopf (15) ausbildet, der zum Abfangen von Zentrifugalkräften mittels radial durch den Wickelkopf (15) hindurchgehender Bolzen (18) an einem sich in axialer Richtung an das Rotorblechpaket (12) anschließenden, konzentrisch innerhalb des Wickelkopfes (15) angeordneten Wickelkopf-Rim (13) befestigt ist, und wobei die Befestigung (16, 17, 18, 21) zur sicheren Aufnahme von axialen Dehnungen des Wickelkopfes (15) ausgebildet ist, wobei die Bolzen (18) am Wickelkopf-Rim (13) jeweils an einem sich in axialer Richtung ersteckenden T-Hammerprofil (17) befestigt sind, welches axial verschieblich in einer zugehörigen axialen T-Nut im Wickelkopf-Rim (13) gelagert ist, **dadurch gekennzeichnet, dass** zusätzliche Kopplungsmittel (22, 23) zur Übertragung der axialen Dehnungen des Wickelkopfes (15) auf das T-Hammerprofil (17) vorgesehen sind, welche eine feste mechanische Kopplung (22, 23) zwischen dem Wickelkopf (15) und dem T-Hammerprofil (17) umfassen, und dass das T-Hammerprofil (17) mit einem radial nach außen abgewinkelten Radialteil (22) hinter den Wickelkopf (15) greift und am Radialteil (22) mittels eines Axialverbinders (23) mit dem Wickelkopf (15) verbunden ist.

2. Rotierende elektrische Maschine nach Anspruch 1, **dadurch gekennzeichnet, dass** die Bolzen (18) als Schraubbolzen ausgebildet und in das T-Hammerprofil (17) eingeschraubt sind.

3. Rotierende elektrische Maschine nach einem der Ansprüche 1 oder 2, **dadurch gekennzeichnet, dass** in axialer Richtung jeweils mehrere Bolzen (18) mit derselben radialen Ausrichtung hintereinander angeordnet sind, und dass alle Bolzen (18) derselben radialen Ausrichtung an einem gemeinsamen T-Hammerprofil (17) befestigt bzw. in ein gemeinsames T-Hammerprofil (17) eingeschraubt sind.

4. Rotierende elektrische Maschine nach Anspruch 3, **dadurch gekennzeichnet, dass** alle Bolzen (18) derselben radialen Ausrichtung über ein gemeinsames Halteelement (24) von außen auf den Wickelkopf (15) einwirken.

## Claims

1. Rotating electric machine (10), in particular hydro generator, having a rotor (11) which comprises a laminated core (12), having a rotor winding (15a, b), extending in the direction of a machine axis (20), wherein the rotor winding (15a, b) forms at the ends of the laminated core (12) respectively one coil end (15), which is fastened, for the absorption of centrifugal forces, by means of bolts (18) extending radially through the coil end (15), on a coil end rim (13) adjoining in axial direction on the laminated core (12), disposed concentrically within the coil end (15), and wherein the fastening (16, 17, 18, 21) is designed for the secure reception of axial stretchings of the coil end (15), wherein the bolts (18) on the coil end rim (13) are fastened respectively on a T-hammer profile (17) extending in axial direction, which is supported in axially slidable manner in a corresponding axial T-groove in the coil end rim (13), **characterised in that** additional coupling means (22, 23) are provided for the transmission of the axial stretchings of the coil end (15) onto the T-hammer profile (17), which comprise a fixed mechanical coupling (22, 23) between the coil end (15) and the T-hammer profile (17), and that the T-hammer profile (17) engages behind the coil end (15) with a radial part (22) angled radially to the outside and on the radial part (22) is connected by means of an axial connector (23) with the coil end (15).

2. Rotating electric machine according to claim 1, **characterised in that** the bolts (18) are formed as threaded bolts and are screwed into the T-hammer profile (17).

3. Rotating electric machine according to any of claims 1 or 2, **characterised in that** in axial direction in each case several bolts (18) with the same radial orientation are disposed behind one another, and that all bolts (18) of the same radial orientation are fastened on a shared T-hammer profile (17) or are screwed into a shared T-hammer profile (17).

4. Rotating electric machine according to claim 3, **characterised in that** all bolts (18) of the same radial orientation act via a shared holding element (24) from outside onto the coil end (15).

## Revendications

1. Machine électrique rotative (10), en particulier générateur hydraulique, avec un rotor (11), qui comprend un paquet de tôles rotorique (12) s'étendant dans la direction d'un axe de machine (20) avec un enroulement rotorique (15a,b), dans laquelle l'enroulement rotorique (15a,b) forme aux extrémité du paquet de tôles rotorique (12) respectivement une tête d'enroulement (15) qui est fixée, pour la réception de forces centrifuges, au moyen de boulons (18) traversant radialement la tête d'enroulement (15) à un rebord de tête d'enroulement (13) agencé concentriquement à l'intérieur de la tête d'enroulement (15) et se raccordant dans la direction axiale au paquet de tôles rotorique (12), et dans laquelle la fixation (16, 17, 18, 21) est conformée pour absorber de manière sécurisée les expansions axiales de la tête d'enroulement (15), dans laquelle les boulons (18) sont respectivement fixés sur un profilé en marteau en T (17) s'étendant dans la direction axiale, qui est monté de manière à effectuer un mouvement axial dans une rainure en T axiale associée du rebord de tête d'enroulement (13), **caractérisée en ce qu'**il est prévu des moyens de couplage supplémentaires (22, 23) pour transférer les expansions axiales de la tête d'enroulement (15) sur le profilé en marteau en T (17), qui comprennent un couplage mécanique fixe (22, 23) entre la tête d'enroulement (15) et le profilé en marteau en T (17) et le profilé en marteau en T (17) s'engage par une partie radiale coudée radialement vers l'extérieur (22) derrière la tête d'enroulement (15) et est relié à la tête d'enroulement (15) sur la partie radiale (22) au moyen d'un raccord axial (23).

2. Machine électrique rotative selon la revendication 1, **caractérisée en ce que** les boulons (18) se présentent sous la forme de boulons filetés qui sont vissés dans le profilé en marteau en T (17).

3. Machine électrique rotative selon l'une quelconque des revendications 1 ou 2, **caractérisée en ce que** plusieurs boulons (18) sont respectivement agencés dans la direction axiale l'un derrière l'autre avec la même orientation radiale et tous les boulons (18) de même orientation radiale sont fixés sur un profilé en marteau en T (17) commun ou sont vissés dans un profilé en marteau en T (17) commun.

4. Machine électrique rotative selon la revendication 3, **caractérisée en ce que** tous les boulons (18) de même orientation radiale agissent de l'extérieur sur la tête d'enroulement (15) via un élément de support commun (24).
